# EUROPEAN PATENT APPLICATION

(11) **EP 4 679 356 A1**
(43) Date of publication of application: **14.01.2026**
(21) Application number: 24778602.3
(22) Date of filing: 24.01.2024
(51) Int. Cl.: G06Q 50/10

(54) **INFORMATION PROCESSING DEVICE, INFORMATION PROCESSING DEVICE CONTROL METHOD, AND PROGRAM**

(30) Priority: 29.03.2023 JP 2023053792
(71) Applicant: Nissin Foods Holdings Co., Ltd., Osaka-shi, Osaka 532-8524 (JP); Nissin Food Products Co., Ltd., Osaka-shi, Osaka 532-8524 (JP)
(72) Inventor: ANDO, Noritaka, Osaka-shi, Osaka 532-8524 (JP); OGAWA, Fumiyasu, Osaka-shi, Osaka 532-8524 (JP); KANEMOTO, Yoshifumi, Osaka-shi, Osaka 532-8524 (JP); FUJIMOTO, Toshiyuki, Osaka-shi, Osaka 532-8524 (JP); MITSUI, Toshihiro, Osaka-shi, Osaka 532-8524 (JP); WATANABE, Go, Osaka-shi, Osaka 532-8524 (JP)
(74) Representative: Ström & Gulliksson AB
(86) International application number: PCT/JP2024/001979
(87) International publication number: WO 2024/202456

(57) **Abstract**

This information processing device comprises: a storage means (e.g., a cooking database 41) that stores recipes for a plurality of dishes (e.g., chicken curry, tomato curry, and the like) which each include a processed food (e.g., semi-processed food, fully processed food (e.g., bulk curry), or the like) and foodstuffs (e.g., ingredients such as carrots and onions, seasonings, and the like) to be added to the processed food, and meet a prescribed nutritional standard (e.g., an upper limit and/or lower limit set for each nutrient); a reception means (e.g., a reception unit 31) that receives a specification of a processed food from a user terminal; and a presentation means that refers to the storage means and presents recipes for a plurality of dishes corresponding to the specified processed food.

## Description

### TECHNICAL FIELD

The present invention relates to an information processing device, an information processing device control method, and a program.

### BACKGROUND ART

Conventionally, many consumers wonder which meals they should eat to maintain their health. There is an increasing need for food that contains the necessary nutrients among such consumers. To meet such a need, information related to recipes and the nutrients of the recipes is provided for a user (e.g., Patent Documents 1 and 2).

Patent Document 1 discloses that in a system for ordering a foodstuff or a processed foodstuff, various pieces of required information related to the foodstuff ordered by a purchaser are provided.

Patent Document 2 discloses a system that creates meal plans in consideration of the nutrient value of each ingredient, based on the nutritional intake allowed for a target person.

### Citation List

### Patent Document

Patent Document 1: Japanese Unexamined Patent Application, Publication No. 2001-338193
Patent Document 2: Japanese Unexamined Patent Application, Publication No. 2003-141259

### DISCLOSURE OF THE INVENTION

### Problems to be Solved by the Invention

Incidentally, there are cases in which a food maker provides semi-processed foodstuffs such as curry sauce, and bulk ingredients as fully processed foodstuffs, for a user such as a restaurant. The user provides dishes made from the bulk ingredients to consumers. In this case, even if the food maker intends to satisfy a prescribed nutritional standard, it may be difficult to satisfy the prescribed nutritional standard depending on the cooking method employed by the user. It is conceivable that the user considers the cooking method to satisfy the prescribed nutritional standard. However, it is burdensome (or cumbersome) to consider each nutrient in the bulk ingredients, ingredients added to the bulk ingredients and the like.

It is an object of the invention to provide the user with information required to prepare dishes that are made from cooked food (e.g., bulk ingredients) and satisfy a prescribed nutritional standard.

### Means for Solving the Problems

To achieve the object described above, an aspect of the present invention is an information processing device including: a storage unit for storing recipes for a plurality of dishes each satisfying a prescribed nutritional standard, the dishes containing processed food, and a foodstuff to be added to the processed food; an acceptance unit for accepting a designation of the processed food from a user terminal; and a presentation unit for referring to the storage unit, and presenting the recipes for the plurality of dishes that correspond to the processed food designated.

### Effects of the Invention

According to the present invention, information required to provide dishes that are made from cooked food (e.g., bulk ingredients) and satisfy the prescribed nutritional standard can be provided to a user.

### BRIEF DESCRIPTION OF THE DRAWINGS

FIG. 1 is a schematic diagram showing a configuration of a bulk ingredient management system;
FIG. 2 is a block diagram showing an example of a hardware configuration of an information processing device;
FIG. 3 is a functional block diagram showing an example of a functional configuration of the information processing device;
FIG. 4 shows an overview of a recipe information presentation function;
FIG. 5 is a flowchart showing an example of a recipe information presentation process;
FIG. 6 shows an overview of a seasoning presentation function;
FIG. 7 shows a screen display example of the seasoning presentation function; and
FIG. 8 is a flowchart showing an example of a seasoning presentation process.

### PREFERRED MODE FOR CARRYING OUT THE INVENTION

### <Overview>

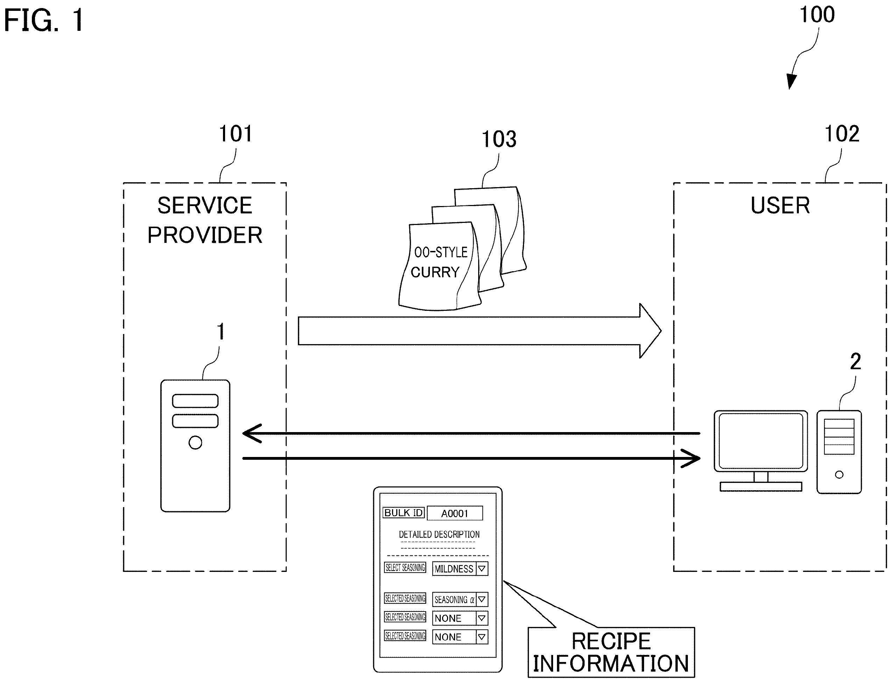

An information processing device according to the present embodiment is described below with reference to the drawings. FIG. 1 is a schematic diagram showing the configuration of a bulk ingredient management system 100 according to the present embodiment. The bulk ingredient management system 100 is a system for allowing a service provider 101 to provide bulk ingredients 103 and recipes for a user 102. The service provider 101 is, for example, a food maker. The user 102 is, for example, a supermarket, a restaurant, an employee cafeteria of a company, or another business operator providing food for consumers. Each of the bulk ingredients 103 is a semi-processed foodstuff or a processed foodstuff, such as curry sauce, demiglace sauce, or pasta sauce. The service provider 101 provides the bulk ingredients 103 to the user 102. The user 102 provides dishes made from the provided bulk ingredients 103 to consumers.

The bulk ingredients 103 generally represent semi-processed or processed food provided by food makers, for the user 102, such as a restaurant providing meals or a supermarket providing prepared dishes and boxed lunches. The bulk ingredient 103 is well designed to allow the user 102 to provide a menu including meals and prepared dishes through simple procedures, and is provided for the restaurant and the user 102 along with cooking recipes by a food-processing company. The user 102 cooks with bulk ingredients according to the cooking recipe from the food maker, and provides dishes for consumers. The user 102 running a restaurant or a supermarket wishes to provide more unique and valuable food for the consumers. In this case, means for changing the amount of each bulk ingredient or adding another ingredient, or the like is taken. The present embodiment can present recipes using the bulk ingredients 103, and present recipes that contain alternative ingredients and seasonings while maintaining the nutrient balance if the taste is intended to be changed.

In the present embodiment, the bulk ingredient management system 100 has a recipe information presentation function, and a seasoning presentation function. The recipe information presentation function can present information related to the bulk ingredients 103 and to dishes indicating the ingredients, as recipe information, and change the ingredients and the amounts of the ingredients. The seasoning presentation function can provide the recipes of original dishes of the user 102, by presenting seasonings that match desired flavor along with the bulk ingredient 103. The details of the present embodiment are described below.

### <System Configuration>

As shown in FIG. 1, the bulk ingredient management system 100 has a configuration that includes an information processing device 1 managed by the service provider 101, and a user terminal 2 managed by the user 102.

The information processing device 1 is a computer that communicates with the user terminal 2 via a communication network, such as the Internet, and transmits and receives various types of information, such as information related to the recipes of the bulk ingredients 103. The information processing device 1 is a server that provides the bulk ingredients 103 and information related to the bulk ingredients 103 for a plurality of users besides the user 102 shown in FIG. 1. The information processing device 1 can perform sales order management for the bulk ingredients 103. Note that in a case where the information processing device 1 receives a system usage fee from the user 102, specifications that allow only users having signed a contract to be provided with services may be adopted.

The user terminal 2 is a computer managed by the user 102 exchanging information related to the bulk ingredient 103 with the information processing device 1. The user terminal 2 may be a personal computer, or a tablet PC, a smartphone or the like.

### <Hardware Configuration>

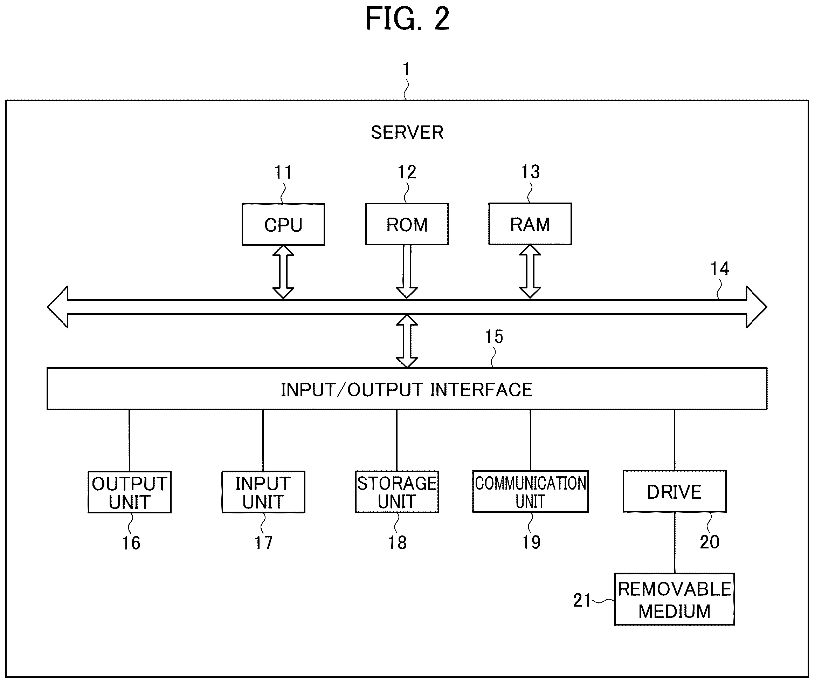

FIG. 2 is a block diagram showing a hardware configuration of the information processing device 1. The information processing device 1 is a computer that includes a CPU (Central Processing Unit) 11, a ROM (Read Only Memory) 12, a RAM (Random Access Memory) 13, a bus 14, an input/output interface 15, an output unit 16, an input unit 17, a storage unit 18, a communication unit 19, and a drive 20.

The CPU 11 executes various processes according to a program stored in the ROM 12, or a program loaded from the storage unit 18 into the RAM 13. The RAM 13 appropriately stores data and the like required by the CPU 11 to execute various processes. The CPU 11, the ROM 12, and the RAM 13 are connected to each other via the bus 14. The input/output interface 15 is also connected to the bus 14.

The output unit 16, the input unit 17, the storage unit 18, the communication unit 19, and the drive 20 are connected to the input/output interface 15. The output unit 16 includes a display, a speaker and the like, and outputs various types of information as images and audio. The input unit 17 includes a keyboard, a mouse and the like, and receives various types of information.

The storage unit 18 includes a hard disk, a DRAM (Dynamic Random Access Memory) and the like, and stores various data items. The communication unit 19 communicates with another device via networks that include the Internet.

A removable medium 21 made up of a magnetic disk, an optical disk, a magneto optical disk, a semiconductor memory or the like is attached to the drive 20 as appropriate. The program read from the removable medium 21 by the drive 20 is installed into the storage unit 18 as required. The removable medium 21 can also store various data items stored in the storage unit 18 in a manner similar to the storage unit 18.

The configuration example of the hardware of the information processing device 1 has thus been described above. Note that the user terminal 2 is a computer that has a hardware configuration similar to that in FIG. 2.

### <Functional Configuration>

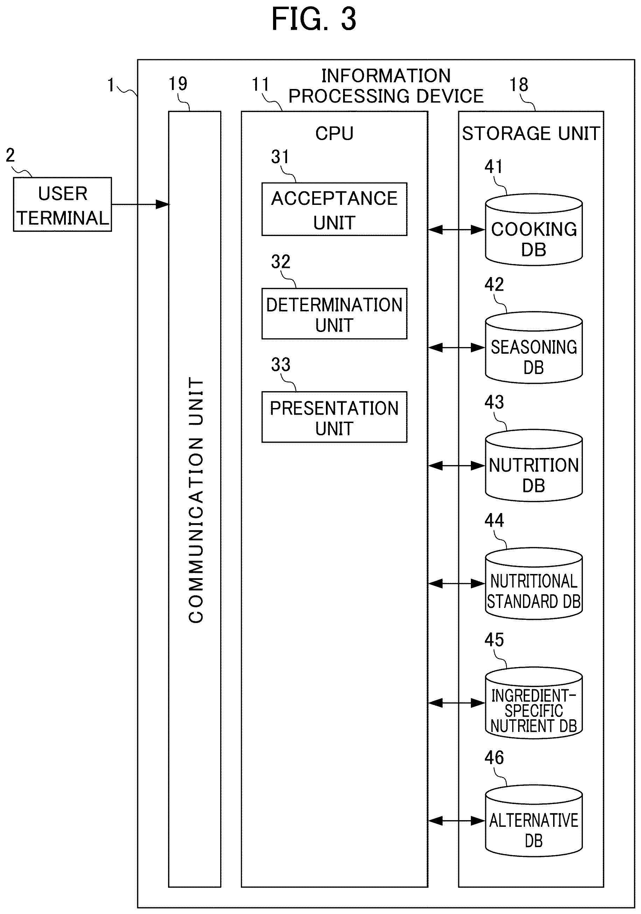

FIG. 3 is a functional block diagram showing an example of the functional configuration of the information processing device 1. Through the hardware described above, the information processing device 1 implements the functional configuration for performing a process of presenting the recipe information to the user 102. As shown in FIG. 3, the information processing device 1 includes an acceptance unit 31, a determination unit 32, a presentation unit 33 and the like, as functional units executed by the CPU 11. These functional units implement: the recipe information presenting function of presenting dishes that contain the bulk ingredients 103 and ingredients corresponding to the ingredients, as the recipe information, to the user 102; and the seasoning presentation function of presenting information related to seasonings corresponding to the bulk ingredients 103, as the recipe information, to the user 102.

### <<Acceptance Unit 31>>

The acceptance unit 31 accepts various types of information from the user terminal 2. For example, the acceptance unit 31 accepts designation of the bulk ingredient 103 (processed food). Specifically, when the user 102 purchases the bulk ingredient 103 from the service provider 101 (food company etc.), the acceptance unit 31 accepts, for example, designation of the identification number (bulk ID) of the purchased bulk ingredient.

For example, the acceptance unit 31 accepts a change of the amount or the type of the foodstuff, from the user terminal 2. Specifically, the acceptance unit 31 accepts an increase or a decrease of the amounts (quantities and weights) of foodstuffs to be added to the bulk ingredient 103, and a change of the types of foodstuffs, such as addition of other foodstuffs. The foodstuffs to be added are materials of dishes, and include, for example, carrots, onions, potatoes, rice, chicken, yogurt, curry powder, hot pepper, soy sauce, and other seasonings, in a case of curry bulk. The other foodstuffs include, for example, green peppers, eggplants and the like in the case of curry bulk.

For example, the acceptance unit 31 accepts setting values for adjusting the taste, from the user terminal 2. Specifically, when the user 102 intends to change the taste of the bulk ingredient 103 to an original taste, the acceptance unit 31 accepts setting values for adjusting the taste from the user terminal 2. The setting values include, for example, spiciness, mildness, freshness and the like.

### <<Determination Unit 32>>

The determination unit 32 refers to various DBs in the storage unit 18, and determines whether the dishes satisfy a prescribed nutritional standard or not. For example, when the amounts or the types of the foodstuffs (vegetables, seasonings, etc.) in dishes are changed, the determination unit 32 determines whether the dishes satisfy the prescribed nutritional standard or not. For example, upon acceptance of the setting values for adjusting the taste from the user terminal 2, the determination unit 32 determines whether the dishes satisfy the prescribed nutritional standard or not.

Here, the prescribed nutritional standard includes, for example, a standard about protein (g), fat (g), carbohydrates (g), salt equivalent (g), sodium (mg), potassium (mg), calcium (mg), magnesium (mg), phosphorus (mg), iron (mg), zinc (mg), chromium (µg), copper (mg), manganese (mg), molybdenum (µg), selenium (µg), iodine (µg), vitamin A (µg), vitamin D (µg), vitamin E (mg), vitamin K (µg), vitamin B1 (mg), vitamin B2 (mg), niacin (mg), vitamin B6 (mg), vitamin B12 (µg), folic acid (µg), vitamin C (mg), biotin (µg), pantothenic acid (mg), choline (mg), chloride (mg), cholesterol (mg), etc. Note that fats include saturated fatty acids (g), n-3 fatty acid (g), 18:3 α-linolenic acid (g), n-6 fatty acid (g), and 18:2 linoleic acid (g). The carbohydrates include sugar content (g), and dietary fiber (g).

### <<Presentation Unit 33>>

The presentation unit 33 presents (outputs) various types of information to the user terminal 2. For example, the presentation unit 33 refers to the various DBs in the storage unit 18, and presents recipes for a plurality of dishes that correspond to the designated processed food. When the user 102 purchases the bulk ingredient 103 from the service provider 101 (food company etc.), the recipes for dishes that can be cooked using the bulk ingredient 103 are presented. For example, in the case of the curry bulk, the dishes include chicken curry, tomato curry, vegetable curry, etc. In the case of the demiglace sauce bulk, the dishes are omelette rice, hamburger steak, etc.

When it is determined by the determination unit 32 described above that the prescribed nutritional standard is not satisfied, the presentation unit 33 presents a message for promoting further changing the amount or the type of the foodstuff. Typically, the service provider 101 creates the recipes for dishes so as to satisfy the prescribed nutritional standard. However, there is a possibility that for example, if the amount of rice is doubled by the user 102, the calories and the like exceed the upper limit (the nutritional standard is not satisfied) due to excessive carbohydrates (excessive sugar content). Accordingly, the aforementioned message is presented by the presentation unit 33, thereby allowing the user 102 to be encouraged to satisfy the prescribed nutritional standard defined by the service provider 101.

When it is determined by the determination unit 32 that the prescribed nutritional standard is not satisfied, the presentation unit 33 presents an alternative foodstuff for satisfying the prescribed nutritional standard. When the message described above is presented, the user 102 is unsure how to arrange foodstuffs to satisfy the prescribed nutritional standard. Accordingly, for example, the presentation unit 33 presents, to the user, an alternative foodstuff (alternative), such as a foodstuff with reduced sugar content and salt.

The presentation unit 33 presents the recipe of the dish that corresponds to the selected attribute. Specifically, the presentation unit 33 refers to the various DBs, and presents the recipe that matches the setting values for adjusting the taste and the flavor that have been accepted by the acceptance unit 31.

### <<Various DBs in Storage Unit 18>>

The storage unit 18 of the information processing device 1 shown in FIG. 3 includes a cooking DB 41, a seasoning DB 42, a nutrition DB 43, a nutrition standard DB 44, an ingredient-specific nutrient DB 45, and an alternative DB 46.

The cooking DB 41 holds the identification numbers respectively assigned to the types of bulk ingredients 103, and dishes made from the bulk ingredient 103 and their ingredients that are associated with these numbers. For example, beef curry, summer curry, and soup curry are set as the dishes set for the bulk ingredient 103, and with respect to each of the dishes, ingredient candidates to be added to the bulk ingredient 103 are stored in a table format. The ingredient candidates are, for example, meat, vegetables, fruits, and other ingredients of dishes. For the other bulk ingredients 103, for example, beef curry (spicy), beef curry (mild), chicken tomato curry, cutlet curry and the like are set. Note that the cooking DB 41 can be considered to store recipes for dishes (beef curry, tomato curry, etc.) that include processed food (semi-processed food, curry bulk, and other fully processed food) and foodstuffs (the aforementioned ingredients, seasonings, etc.) to be added to the processed food, and satisfy the prescribed nutritional standard.

The cooking DB 41 holds the identification numbers respectively assigned to the types of bulk ingredients 103, and information that is related to the recipes for dishes made from the bulk ingredient 103 and is associated with these numbers. For example, the cooking DB 41 holds the identification number of each bulk ingredient 103, and ingredients (e.g., vegetables etc.), multiple types of seasonings (flavor), the level of seasoning amount and the like that are to be added to the bulk ingredient, as the recipe information. Note that the cooking DB 41 can be considered to store foodstuffs to be added to the processed food with respect to each attribute (e.g., flavor) pertaining to a taste of the processed food.

The seasoning DB 42 holds the standard amount of each nutrient with respect to each seasoning stored in the cooking DB 41. For example, the seasoning DB 42 holds the standard amounts of types of nutrients with respect to each seasoning in a table format.

The nutrition DB 43 holds the identification number assigned to each type of the bulk ingredient 103, and the standard amount of each nutrient (the content of the nutrient) of the bulk ingredient 103 that is associated with the identification number. For example, the nutrition DB 43 holds the standard amounts of types of nutrients with respect to each bulk ingredient 103 (identification number) in a table format.

The nutrition standard DB 44 holds the upper limit and/or lower limit for each nutrient in association with each other. For example, the nutrition standard DB 44 holds the upper limit and/or lower limit (prescribed nutritional standard) for each nutrient that are set for the bulk ingredient 103 and the seasoning in a table format.

The ingredient-specific nutrient DB 45 holds the standard amounts of types of nutrients with respect to each ingredient stored in the cooking DB 41. The ingredient-specific nutrient DB 45 holds, for example, the standard amounts of types of nutrients associated with each ingredient. In this example, the standard amounts of the nutrients with respect to each of the ingredients that are beef, potato, green pepper and the like are shown in weight units.

The alternative DB 46 holds the seasonings held in the seasoning DB 42, and alternative seasonings with which the corresponding seasonings can be substituted and which are associated with the seasonings. The alternative DB 46 hold, for example, a seasoning α indicated as an alternative of the first seasoning, and seasonings β and γ indicated as alternatives of the second seasoning. The alternative DB 46 holds information on the alternatives associated with the ingredients stored in the cooking DB 41. As described above, the alternative DB 46 also holds the information on alternatives of the ingredients constituting the dishes, as other food different from seasonings.

### <Overview of Recipe Information Presentation Function>

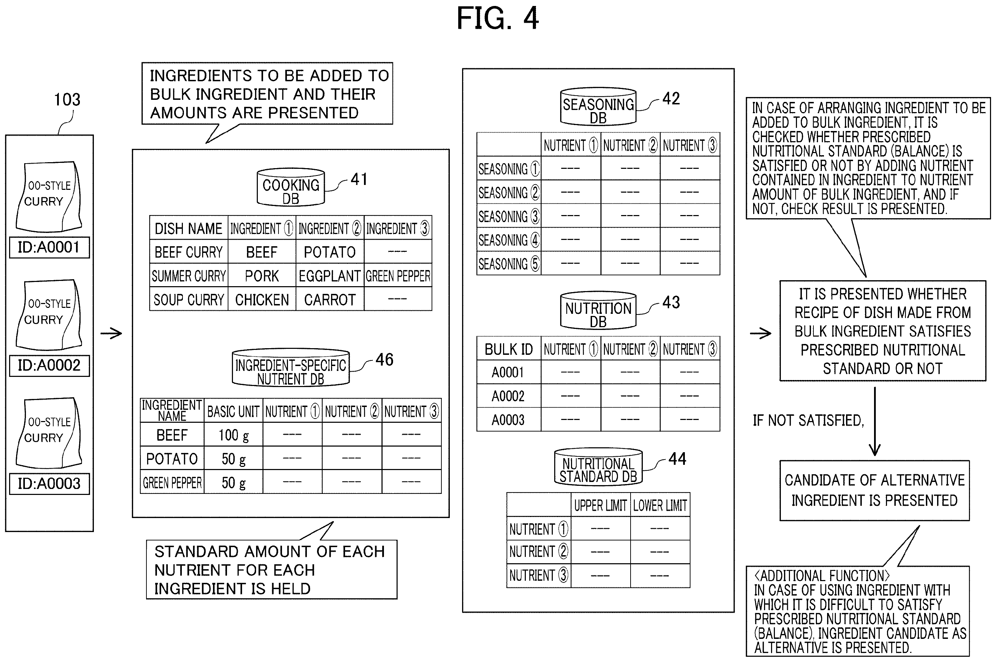

FIG. 4 shows an overview of a recipe information presentation function. As shown in FIG. 4, the presentation unit 33 refers to the cooking DB 41 and the ingredient-specific nutrient DB 45, and presents the ingredients to be added to the dishes made from the bulk ingredient 103 and their amounts. The presentation unit 33 refers to the seasoning DB 42, the nutrition DB 43, and the nutrition standard DB 44, and presents whether the recipe of the dish made from the bulk ingredient satisfies the prescribed nutritional standard or not. Specifically, in a case where the ingredients to be added to the bulk ingredient 103 are arranged, the presentation unit 33 checks whether the balance of the prescribed nutritional standard is held after the nutrients contained in the ingredients are added to the amount of nutrients of the bulk ingredient 103, and if not held, this unit presents this state. If the prescribed nutritional standard is not satisfied, the presentation unit 33 presents the ingredient candidate as an alternative. In other words, in a case of using an ingredient with which it is difficult to satisfy the balance of the prescribed nutritional standard, an ingredient candidate as an alternative is presented.

### <Recipe Information Presentation Process>

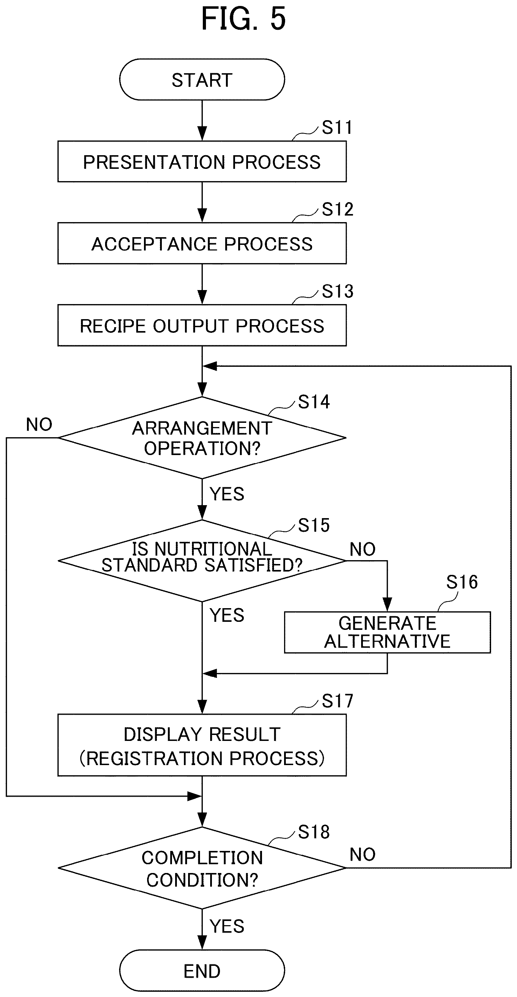

FIG. 5 is a flowchart showing an example of a recipe information presentation process. An example where the recipe information includes the bulk ingredient 103, and ingredients to be added to the bulk ingredient 103 is described. The recipe information presentation function can present information related to the bulk ingredients 103 and to dishes indicating the ingredients, as recipe information, and change the ingredients and the amounts of the ingredients.

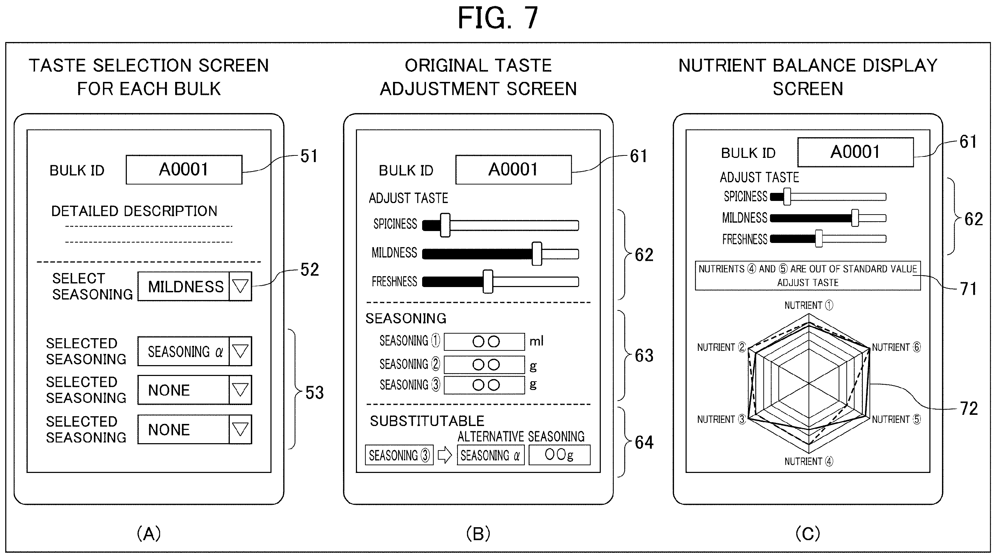

In step S11, the presentation unit 33 executes a presentation process of presenting information for allowing the user terminal 2 held by the user 102 to select the bulk ingredient 103, and the dish to be made from the bulk ingredient 103. For example, an input method may be adopted that allows an input into an after-mentioned box shown in FIG. 7(A), and selection through pull-down menus. A configuration may be adopted where upon input of the bulk ID in the box, selection from a list of dishes corresponding to the bulk ID through a pull-down menu is allowed. After the process in step S11, the processing transitions to step S12.

In step S12, the acceptance unit 31 executes an acceptance process of accepting a selection result by the user 102 from the user terminal 2. The selection result is information that includes the bulk ID identifying the bulk ingredient 103, and dishes. After the process in step S12, the processing transitions to step S13.

In step S13, the presentation unit 33 outputs recipe information that satisfies the prescribed nutritional standard, based on recipe identifying information accepted by the acceptance unit 31. For example, the presentation unit 33 inputs the identification number and the dishes that are included in the recipe identifying information, into the cooking DB 41, acquires information related to the dishes, and outputs the information as the recipe information that is to be provided for the user terminal 2. For example, when beef curry is selected as a dish to be made from the bulk ingredient 103, information related to ingredients that include beef as the first ingredient, and potato as the second ingredient is output as the recipe information to the user terminal 2. In this example, the recipe information also includes information related to the ingredient amount. The recipe information indicates a cooking method that satisfies the prescribed nutritional standard. After the process in step S13, the processing transitions to step S14.

In step S14, the acceptance unit 31 determines whether an arrangement operation is performed on the user terminal 2 by the user 102 or not. The arrangement operation includes changing an ingredient in the recipe, changing the quantity of an ingredient, or adding a new ingredient, as performed by the user 102.

If the arrangement operation is not performed, the acceptance unit 31 causes the processing to transition to step S18 (step S14: NO). If the arrangement operation is performed, the acceptance unit 31 advances the processing to step S15 (step S14: YES).

In step S15, the determination unit 32 determines whether a new recipe satisfies the prescribed nutritional standard or not based on the operation result by the user 102. If the prescribed nutritional standard is not satisfied, the determination unit 32 advances the processing to step S16 (step S15: NO). If the prescribed nutritional standard is satisfied, the determination unit 32 causes the processing to transition to step S17 (step S15: YES).

In step S16, the presentation unit 33 refers to the alternative DB 46, and executes a process of generating an alternative that satisfies the prescribed nutritional standard. The alternative may indicate ingredients different from the ingredients indicated by the recipe information, or change the ingredient amount indicated by the recipe information.

In step S17, the presentation unit 33 outputs a determination result by the determination unit 32. If it is determined that the nutritional standard is satisfied in step S15, the determination result indicating that the recipe information subjected to the arrangement operation satisfies the nutritional standard is output to the user terminal 2. If it is determined that the nutritional standard is not satisfied in step S15, the determination result indicating the recipe information subjected to the arrangement operation, failure to satisfy the nutritional standard, and an alternative is output.

In the present embodiment, if the arranged recipe satisfies the prescribed nutritional standard, the presentation unit 33 executes a registration process of registering the recipe (information indicating the combination of the bulk ingredient 103 and the ingredients) as the recipe information in the cooking DB 41 in the process in step S17.

In step S18, the acceptance unit 31 determines whether a completion condition, such as the acceptance of information indicating fixed determination of the content after the arrangement operation by the user 102, is satisfied or not. The completion condition may be a case of accepting an operation indicating termination or the like, or a case of accepting information indicating that no arrangement operation is performed by the user 102. As described above, the completion condition can be set as appropriate. If the acceptance unit 31 determines completion, the processing is finished (step S18: YES). If the acceptance unit 31 does not determine completion, the processing is returned to step S14 (step S18: NO).

### <Overview of Seasoning Presentation Function>

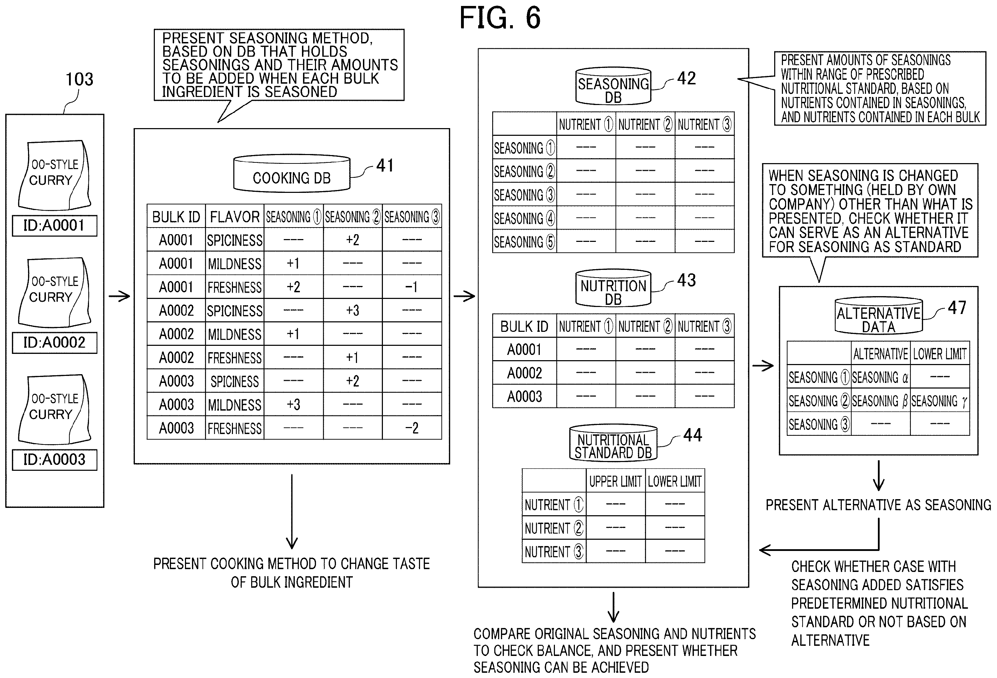

FIG. 6 shows an overview of a seasoning presentation function. The presentation unit 33 refers to the cooking DB 41, and presents a seasoning method, based on a database that holds seasonings and their amounts to be added when each bulk ingredient is seasoned. The presentation unit 33 presents the amounts of seasonings falling in a range of the prescribed nutritional standard, based on the nutrients contained in the seasonings, and the nutrients contained in each bulk. Here, when the seasoning is changed to something (held by the own company) other than what is presented, the determination unit 32 determines whether it can serve as an alternative for the seasoning adopted as the standard. If it can be substituted, the presentation unit 33 presents the alternative as the seasoning. The determination unit 32 determines whether the case with the seasoning being added satisfies the nutritional standard or not based on the alternative. As described above, the presentation unit 33 compares the original seasoning and nutrients to check the balance, and presents whether the seasoning can be achieved.

### <Seasoning Presentation Process>

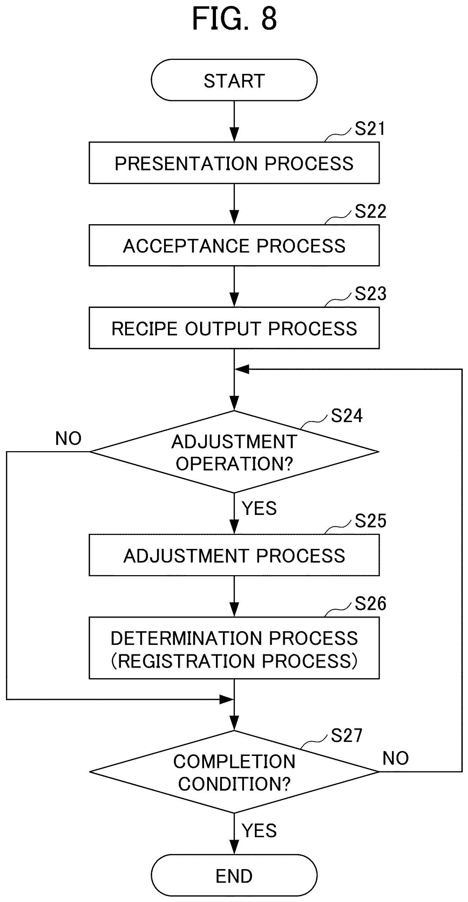

FIG. 8 is a flowchart showing an example of a seasoning presentation process. The seasoning presentation process presents the types and proportions of seasonings that define the bulk ingredient 103, and changes the combination of the seasonings, thereby allowing the taste of the bulk ingredient 103 to be adjusted.

In step S21, the presentation unit 33 executes a presentation process of presenting information for allowing the user terminal 2 held by the user 102 to select the bulk ingredient 103 and the seasoning for the bulk ingredient 103. The seasoning has a variation in tastes and flavor. For the variation in seasoning, levels ranging from light to rich and from weak to strong can be set. FIG. 7(A) shows an example of a bulk ingredient selection screen displayed by the information processing device 1 in the present embodiment.

In the example shown in FIG. 7(A), the presentation unit 33 executes a process of causing the user terminal 2 to display a screen that includes: an input unit 51 that receives the bulk ID (the identification number of the bulk ingredient 103); a seasoning selection unit 52 that selects the seasoning; and an alternative seasoning selection unit 53 for selecting an alternative different from the preset seasoning. Upon input of the bulk ID, the detailed description of the bulk ingredient 103 corresponding to the bulk ID is displayed together on this screen. While a box format for inputting any numeral is applied to the input unit 51, and pull-down menus are applied to the seasoning selection unit 52 and the alternative seasoning selection unit 53, they are only examples. The input method can be changed as appropriate depending on situations. After the process in step S21, the processing transitions to step S22.

In step S22, the acceptance unit 31 executes an acceptance process of accepting a selection result by the user 102, as the recipe information, from the user terminal 2. In the example in FIG. 7(A), the acceptance unit 31 accepts the bulk "ID0001", seasoning "mildness", alternative "seasoning α", as recipe identifying information. After the process in step S22, the processing transitions to step S23.

In step S23, the presentation unit 33 outputs recipe information that satisfies the prescribed nutritional standard, based on recipe identifying information accepted by the acceptance unit 31.

The prescribed nutritional standard is a standard (e.g., the upper limit and/or lower limit) predefined for each nutrient, and corresponds to, for example, a standard for satisfying the nutrients of food allowing one third of the nutrients required for one day to be taken in a single meal, and the like. The presentation unit 33 inputs the identification number and the seasoning information that are included in the recipe identifying information, into the cooking DB 41, acquires information related to the required seasonings, and outputs the information as the recipe information that is to be provided for the user terminal 2. The presentation unit 33 inputs the seasoning designated as the alternative into the alternative DB 46, determines whether it can be substituted or not, and outputs the determination result to the user terminal 2. FIG. 7(B) shows an example of a recipe information screen displayed by the information processing device 1 in the present embodiment.

In the example shown in FIG. 7(B), the presentation unit 33 executes a process of causing the user terminal 2 to display a screen that includes: an ID display unit 61 for displaying the bulk ID; a taste adjustment unit 62 used when the taste is adjusted; a recipe information unit 63 for indicating the types and amounts of seasonings as the recipe information; and an alternative determination result display unit 64 indicating the availability of the alternative. This screen indicates the composition of seasonings as the recipe information on the recipe information unit 63, and indicates the seasoning α to be used as the alternative for the seasoning 3 and its amount on the alternative determination result display unit 64. The taste adjustment unit 62 has a format of multiple slide bars. In this case, the taste can be adjusted through multiple slide bars, such as "spiciness", "mildness", and "freshness". After the process in step S23, the processing transitions to step S24.

In step S24, the acceptance unit 31 determines whether a taste adjustment operation is performed on the user terminal 2 by the user 102 or not. If the taste adjustment operation is not performed, the acceptance unit 31 causes the processing to transition to step S27 (step S24: NO). If the taste adjustment operation is performed, the acceptance unit 31 advances the processing to step S25 (step S24: YES).

In step S25, the presentation unit 33 executes an adjustment process of outputting the recipe information again based on the operation result by the user 102. In the example in FIG. 7(B), depending on the amount of movement of the slide bars of the taste adjustment unit 62, the amounts of seasonings displayed on the recipe information unit 63, and the amount of alternative seasoning displayed on the alternative determination result display unit 64 change accordingly. After the process in step S25, the processing transitions to step S26.

In step S26, the determination unit 32 executes a determination process of determining whether the recipe information changed depending on the operation result by the user 102 satisfies the prescribed nutritional standard or not. For example, the determination unit 32 refers to the output result of the presentation unit 33, and the nutrition standard DB 44, and determines whether each nutrient is in a range between the prescribed upper limit and lower limit or not. FIG. 7(C) shows an example of a determination result screen displayed by the information processing device 1 in the present embodiment.

In the present embodiment, if the taste-adjusted recipe satisfies the prescribed nutritional standard, the presentation unit 33 executes a registration process of registering the recipe (information indicating the proportion of the bulk ingredient 103 and the seasonings) as the recipe information in the cooking DB 41 in the process in step S26.

In the example in FIG. 7(C), the presentation unit 33 executes a process of causing the user terminal 2 to display a screen that includes: the ID display unit 61 for displaying the bulk ID; the taste adjustment unit 62 used when the taste is adjusted; a determination result display unit 71 for indicating a determination result of whether the prescribed nutritional standard is satisfied or not; and a graph display unit 72 for indicating the nutritional standard by a graph. On the determination result display unit 71, the determination result is displayed by text. In this example, it displays text indicating that the adjusted recipe does not meet the nutritional standard and encouraging the user to readjust the recipe. The graph display unit 72 visually displays the nutrients in the adjusted recipe by a radar chart. After the process in step S26, the processing transitions to step S27.

In step S27, the acceptance unit 31 determines whether a completion condition, such as the acceptance of information indicating fixed determination of the content after the adjustment by the user 102, is satisfied or not. The completion condition may be a case of accepting an operation indicating termination or the like, or a case of accepting information indicating that no taste adjustment operation is performed by the user 102. As described above, the completion condition can be set as appropriate. If the acceptance unit 31 determines completion, the processing is finished (step S27: YES). If the acceptance unit 31 does not determine completion, the processing is returned to step S24 (step S27: NO).

### <Advantageous Effects of Present Embodiment>

According to the embodiment described above, when the user 102 identifies the bulk ingredient 103 by an order or the like, the recipe information that uses the bulk ingredient 103 and satisfies the prescribed nutritional standard is output. Without complicated nutrient calculation and a chef's study of recipes, the user 102 can easily provide consumers with food that satisfies the prescribed nutritional standard.

According to the embodiment described above, the recipe that satisfies the prescribed nutritional standard can be selected from among multiple types, which can increase the alternatives of recipes, and provide services matching the needs of the user 102.

According to the embodiment described above, the acceptance unit 31 can accept user-specified ingredients and seasonings designated by the user 102 . This allows the system to output recipe information for dishes that combine the bulk ingredient 103 (e.g. curry base) with the user's own choice of additional spices or ingredients, enabling an original flavor adjustment. For example, a user 102 such as a supermarket can use the recipe information to create original products with flavors adjusted to consumer preferences. Even if the user 102 customizes the seasonings or ingredients added to bulk ingredient 103, the determination unit 32 makes it easy to tell whether the modified recipe meets the nutritional standards. If the modified recipe's nutrients fail to satisfy the prescribed standards (upper or lower limits), the determination result will clearly show that the chosen seasoning/flavor combination cannot produce a dish that meets those standards.

The amount of foodstuff, the processing method, and other limitations are present to satisfy the prescribed nutritional standard. The bulk ingredient 103 is balanced and adjusted by the service provider 101, such as a food maker. Accordingly, it is difficult for the user 102 to apply processing and provide dishes and food that satisfy the prescribed nutritional standard. With this embodiment, the user 102 can easily adjust ingredients, seasonings, or their amounts to meet the nutritional standard without lengthy trial-and-error. For example, normally a chef might have to experiment with adding or substituting ingredients (e.g. to increase calories) to meet the standard. In contrast, using the proposed alternative suggestions allows quick selection of appropriate ingredients.

According to the embodiment described above, recipes that satisfy the prescribed nutritional standard are accumulated, which can increase the alternatives for the user 102 to use next time.

### <Modified Example>

Each embodiment of the present embodiment has thus been described above. However, the present invention is not limited to the embodiments described above. Modifications, improvements and the like in a range capable of achieving the object of the present invention are encompassed in the present invention.

With the aforementioned embodiment, the example of the configuration of providing the new recipe information for the user 102 by adjusting the taste and ingredients has been described. However, there is no limitation to this configuration. For example, the calories and the like may be adjusted by the user 102, and the recipe information based on the adjustment result may be output.

With the aforementioned embodiment, the example of outputting the recipe of curry that satisfies the prescribed nutritional standard as the recipe information has been described. However, the recipe information providing method is not limited to this. For example, a combination of curry with white rice, naan or the like may be adopted as a recipe.

In the aforementioned embodiment, the information processing device 1 managed by the service provider 101 has the configuration of outputting the recipe information that satisfies the prescribed nutritional standard. However, a configuration may be adopted where an information processing device having functions similar to those of the information processing device 1 in the aforementioned embodiment is installed on the user 102 side. For example, a configuration where the program is installed in the user terminal 2 may be adopted.

The series of processes described above may be executed by hardware or executed by software. In other words, the mechanical configuration described above is only an example, and there is no limitation to this. That is, it is only required that functions that can execute the aforementioned series of processes as a whole are provided for the information processing system. Specific use of functional blocks to implement the functions are not limited to the example described above. Locations where the functional blocks reside are not specifically limited, and may be freely defined. For example, functional blocks of the server may be delegated to another device or the like. In contrast, functional blocks of another device may be delegated to the server or the like. One functional block may be made up of a single piece of hardware, a single piece of software, or a combination of them.

In the case where the series of processes are executed by software, a program constituting the software is installed into a computer or the like through a network or from a recording medium. The computer may be a computer implemented in dedicated hardware. The computer may be a computer that can execute various functions by installing various programs, for example, a general-purpose smartphone or a personal computer instead of the server.

A recording medium that includes such programs is made up of a removable medium that is not shown, separated from the device itself, and is distributed to provide the programs for the user or the like, or made up of a recording medium or the like that is provided to the user or the like in a state of being implemented in the device itself. The programs can be distributed via the network. Accordingly, the recording medium may be implemented in or accessible to a computer connected or connectable to the network.

### <Supplement>

Note that in the present Description, processes to be performed on a time-series basis according to their order in a step of describing a program to be recorded in a recording medium are not necessarily performed on the time-series manner, and may include processes executed in parallel or individually. In the present Description, the term of the system means an overall apparatus that includes multiple devices, multiple pieces of means and the like.

In other words, the information processing device to which the present invention is applied can be implemented as various types and various modes of embodiments having the following configurations.
(1) That is, an information processing device includes: a storage unit (e.g., the cooking DB 41) for storing recipes for a plurality of dishes (e.g., the chicken curry, tomato curry, etc.) each satisfying a prescribed nutritional standard (e.g., the upper limit and/or lower limit provided for each nutrient), the dishes containing processed food (e.g., semi-processed food, fully processed food (e.g., bulk curry), etc.), and a foodstuff (e.g., carrots, onions and other ingredients, seasonings, etc.) to be added to the processed food; an acceptance unit (e.g., the acceptance unit 31) for accepting a designation of the processed food from a user terminal; and a presentation unit for referring to the storage unit, and presenting the plurality of recipes for the dishes that correspond to the processed food designated.
(2) It is preferable to further include a determination unit for determining whether the dishes satisfy the prescribed nutritional standard or not when an amount or a type of the foodstuff is changed in the dishes.
(3) Preferably, the acceptance unit accepts a change of the amount or the type of the foodstuff from the user terminal, and when it is determined by the determination unit that the prescribed nutritional standard is not satisfied, the presentation unit presents a message to encourage further changing the amount or the type of the foodstuff.
(4) Preferably, when it is determined by the determination unit that the prescribed nutritional standard is not satisfied, the presentation unit presents an alternative foodstuff for satisfying the prescribed nutritional standard.
(5) Preferably, the storage unit stores the foodstuff to be added to the processed food with respect to each attribute pertaining to a taste of the processed food, the acceptance unit accepts a selection of the attribute from the user terminal, and the presentation unit presents the recipes of the dishes that correspond to the attribute selected.
(6) It is preferable to further include a determination unit for determining whether the dishes satisfy the prescribed nutritional standard or not when the acceptance unit accepts a setting value for adjusting the taste from the user terminal.
(7) The present invention can be grasped as a method for controlling an information processing device comprising a storage unit for storing recipes for a plurality of dishes each satisfying a prescribed nutritional standard, the dishes containing processed food, and a foodstuff to be added to the processed food, the method including: an acceptance step of accepting a designation of the processed food from a user terminal; and a presentation step of referring to the storage unit, and presenting the recipes for the plurality of dishes that correspond to the processed food designated.
(8) The present invention can be grasped as a computer program for an information processing device comprising a storage unit for storing recipes for a plurality of dishes each satisfying a prescribed nutritional standard, the dishes containing processed food, and a foodstuff to be added to the processed food, the program causing a computer to execute: an acceptance step of accepting a designation of the processed food from a user terminal; and a presentation step of referring to the storage unit, and presenting the recipes for the plurality of dishes that correspond to the processed food designated.

### EXPLANATION OF REFERENCE NUMERALS

1: Information processing device, 2: User terminal, 31: Acceptance unit, 32: Determination unit, 33: Presentation unit 100: Bulk ingredient management system

## Claims

1. An information processing device, comprising:
a storage unit for storing recipes for a plurality of dishes each satisfying a prescribed nutritional standard, the dishes containing processed food, and a foodstuff to be added to the processed food;
an acceptance unit for accepting a designation of the processed food from a user terminal; and
a presentation unit for referring to the storage unit, and presenting the recipes for the plurality of dishes that correspond to the processed food designated.

2. The information processing device according to claim 1, further comprising
a determination unit for determining whether the dishes satisfy the prescribed nutritional standard or not when an amount or a type of the foodstuff is changed in the dishes.

3. The information processing device according to claim 2, wherein
the acceptance unit accepts a change of the amount or the type of the foodstuff from the user terminal, and
when it is determined by the determination unit that the prescribed nutritional standard is not satisfied, the presentation unit presents a message to encourage further changing the amount or the type of the foodstuff.

4. The information processing device according to claim 3, wherein when it is determined by the determination unit that the prescribed nutritional standard is not satisfied, the presentation unit presents an alternative foodstuff for satisfying the prescribed nutritional standard.

5. The information processing device according to claim 1, wherein
the storage unit stores the foodstuff to be added to the processed food with respect to each attribute pertaining to a taste of the processed food,
the acceptance unit accepts a selection of the attribute from the user terminal, and
the presentation unit presents the recipes of the dishes that correspond to the attribute selected.

6. The information processing device according to claim 5, further comprising
a determination unit for determining whether the dishes satisfy the prescribed nutritional standard or not when the acceptance unit accepts a setting value for adjusting the taste from the user terminal.

7. A method for controlling an information processing device comprising a storage unit for storing recipes for a plurality of dishes each satisfying a prescribed nutritional standard, the dishes containing processed food, and a foodstuff to be added to the processed food, the method comprising:
an acceptance step of accepting a designation of the processed food from a user terminal; and
a presentation step of referring to the storage unit, and presenting the recipes for the plurality of dishes that correspond to the processed food designated.

8. A computer program for an information processing device comprising a storage unit for storing recipes for a plurality of dishes each satisfying a prescribed nutritional standard, the dishes containing processed food, and a foodstuff to be added to the processed food, the program causing a computer to execute:
an acceptance step of accepting a designation of the processed food from a user terminal; and
a presentation step of referring to the storage unit, and presenting the recipes for the plurality of dishes that correspond to the processed food designated.
